# EUROPEAN PATENT APPLICATION

(11) **EP 1 536 228 A1**
(43) Date of publication of application: **01.06.2005**
(21) Application number: 03104413.4
(22) Date of filing: 27.11.2003
(51) Int. Cl.: G01N 30/24

(54) **Dual loop autosampling**

(71) Applicant: Agilent Technologies, Inc., Palo Alto, CA 94306 (US)
(72) Inventor: Kretz, Wolfgang, c/o Agilent Tech. De. Gmbh, 76337 Waldbronn (DE); Godel, Herbert, c/o Agilent Tech. De. Gmbh, 76337 Waldbronn (DE)
(74) Representative: Barth, Daniel

(57) **Abstract**

A system for separating compounds in a given sample is described, whereby the system comprises a multi-route injection valve, and a first and a second sample loop being connected between respective valve ports of the multi-route injection valve. The system comprises one or more loading flow paths, with the multi-route injection valve being operable to couple the first sample loop and the second sample loop separately with at least one of the loading flow paths. Furthermore, the system comprises one or more flow paths for sample separation, with the multi-route injection valve being operable to couple the first sample loop and the second sample loop separately with one of the flow paths for sample separation.

## Description

### BACKGROUND OF THE INVENTION

The present invention relates to an injection valve assembly for use in a system for separating compounds, to a system for separating compounds, and to a method for separating compounds in a given sample.

In order to purify various different compounds of a given sample, a comparatively large volume of sample is migrated through a separation column, and at the outlet of the separation column, various different fractions are obtained. For preparative work, rather large sample volumes are required. After the various compounds have been purified, a purity check might have to be performed. For analytical work of this kind, it is favorable to use a separation system with completely different properties, because the sample volumes used in analytical work are much smaller than those used in preparative work.

US Patent 6,502,448 to E. Rapkin relates to a Chromatography Detection System and Method. In US Patent 6,012,487 to B. A. Hauck, a prime purge injection valve or multi-route selection valve is described. US Patent 6,296,771 to P. Miroslav describes a parallel high-performance liquid chromatography with serial injection. US Patent 6,382,05 to J. A. Nichols relates to a multi-valving sample injection apparatus.

### SUMMARY OF THE INVENTION

It is an object of the invention to separate sample compounds in a way that both the requirements of analytical and preparative scale separation can be fulfilled. The object is solved by the independent claims. Preferred embodiments are shown by the dependent claims.

According to embodiments of the present invention, an injection valve assembly is provided, with the injection valve comprising a multi-route injection valve and a first and a second sample loop that are connected to respective valve ports of the multi-route injection valve. The multi-route injection valve can be operated in a way that each of the first sample loop and the second sample loop may be separately connected with one or more loading flow paths. Furthermore, the multi-route injection valve is operable in a way that each of the first sample loop and the second sample loop may be separately connected with one or more flow paths for sample separation.

The above described injection valve assembly allows to construct an instrument for separating compounds that comprises two sample loops. Sample may be separately loaded into either one of the two sample loops, and the sample volumes contained in the sample loops may be separately injected into one or more separation flow paths. Hence, the injection valve assembly allows integrating the flow paths of two separate systems for sample separation into one system. The required lab space is reduced, and a cost efficient solution is accomplished.

According to a preferred embodiment of the invention, the first sample loop and the second sample loop might comprise equal sample volumes. Sample can be loaded into one of the sample loops, while the sample contained in the other sample loop may be injected into a flow path for sample separation. By simultaneously performing the loading and injecting operations, the system's throughput can be increased.

Alternatively, in another embodiment, the first sample loop might e.g. be a sample loop for analytical scale sample volumes, while the second sample loop might correspond to preparative scale sample volumes. This allows integrating the facilities for analytical work and for preparative work into one single instrument that can be used for both purposes. In particular, when an analytical scale sample volume is loaded into a sample loop of corresponding size, a complete loop fill can be performed. Hence, utilizing sample loops with volumes that are adapted to the respective purpose allows improving the precision.

According to a preferred embodiment of the invention, the multi-route injection valve can be set to two different positions. In the valve's first position, the first sample loop is loaded with sample, while the content of the second sample loop is injected into a flow path for sample separation. When the injection valve is set to its second position, the content of the first sample loop is injected into a flow path for sample separation, while the second sample loop is loaded with sample via a loading flow path. An injection valve assembly of this kind allows loading sample into the first sample loop while separating and characterizing the content of the second sample loop. Then, the injection valve is switched to its second position, and the content of the first sample loop is separated and
characterized while sample may be loaded into the second sample loop. By means of this intermittent operation, the tasks of analytical work and preparative work can be combined more effectively.

In another embodiment of the invention, the injection valve is connected with two separate loading flow paths, whereby the first sample loop may be connected with a first loading flow path, and whereby the second sample loop may be connected with a second loading flow path. In a first position of the injection valve, the first sample loop is connected with the first loading flow path, and the second sample loop is connected with a flow path for sample separation. In the injection valve's second position, the first sample loop is connected with the flow path for sample separation, and the second sample loop is connected with the second loading flow path. The first loading flow path is adapted for loading sample into the first sample loop, which might e.g. be an analytical scale sample loop. Hence, the first loading flow path can be geometrically adapted to analytical scale sample volumes. For example, the first loading flow path might comprise capillaries with a low inner diameter, in order to reduce the dispersion of the injected sample volume. As far as the second loading flow path is concerned, a large inner diameter might be more appropriate for handling large sample volumes.

In an alternative embodiment, the injection valve might be connected with one loading flow path, whereby sample volumes may be loaded into either one of the first and the second sample loop via this common loading flow path. In the first position of the injection valve, the first sample loop is connected with the loading flow path, and the second sample loop is connected with a flow path for sample separation. In the second position of the injection valve, the first sample loop is connected with the flow path for sample separation, and the second sample loop is connected with the loading flow path. By providing one common loading flow path, sample can be loaded into either one of the first and the second sample loop via one needle port. Hence, the handling of the instrument is simplified.

In another embodiment of the invention, the injection valve is connected with one common separation flow path, whereby either one of the first and the second sample loop can be connected with this common flow path for sample separation. Preferably, the common flow path for sample separation is adapted for supporting both analytical and preparative work. In another embodiment the flow path or sample separation comprises an all-purpose separation column capable of separating analytical scale sample volumes as well as preparative scale sample volumes.

Further alternatively, the common flow path for sample separation might comprise a column selection valve that allows directing the flow either to a small separation column for analytical separation or to a large separation column for preparative work. In order to reduce the pressure drop within the preparative scale separation column, it is advantageous to utilize a separation column with a large inner diameter for performing large scale sample separations.

In another preferred embodiment of the invention, the set-up comprises a first flow path for sample separation that may be connected with the first sample loop, and a second flow path for sample separation that may be connected with the second sample loop. In the injection valve's first position, the first sample loop is coupled with a loading flow path, and the second sample loop is connected with the second flow path for sample separation. In the second position of the injection valve, the first sample loop is connected with the first flow path for sample separation, and the second sample loop is coupled with a loading flow path. This embodiment allows adapting the properties, in particular the geometrical properties of the first and the second separation flow path, to the properties of the first and the second sample loop. For example, in case the first sample loop is implemented as an analytical scale sample loop, the first flow path for sample separation might comprise capillaries with a rather small inner diameter, in order to reduce the dispersion. Furthermore, the first flow path for sample separation might support rather small flow rates suitable for analytical separations. In case the second sample loop is realized as a preparative scale sample loop, the geometry of the second flow part for sample separation might be adapted to support large flow rates and large sample volumes. In this case, the inner diameter of to tubing must not be too small.

This embodiment allows integrating the facilities required for analytical work and for preparative work into one single instrument, whereby the implementation of the various flow paths is adapted to the respective purpose.

In prior art solutions, it has been necessary to employ two different instruments, with one instrument being optimized for analytical work, and with the other instrument being optimized for preparative work. These two instruments can be replaced by one single instrument, whereby the quality of both the analytical and the preparative separations is maintained. The tasks of purifying a given sample (preparative work) and performing a purity check (analytical work) of the compounds obtained as a result of the preparative separation are closely related to each other. If both tasks are integrated in one instrument, it will not be necessary any more to transfer sample from one instrument to another instrument. Sample volumes obtained at the output of the preparative flow path can be used as an input for the analytical flow path, whereby the sample volumes might e.g. be stored within one or more well plates. Therefore, the present invention is well-suited for supporting well plates.

In particular, according to another preferred embodiment, the first flow path for sample separation might comprise an analytical scale separation column, and the second flow path for sample separation might comprise a preparative scale separation column. By providing two separate columns, both the column size and the inner diameter of the columns can be adapted to the respective tasks. By employing a small analytical scale separation column, sample dispersion can be minimized. By providing a preparative scale separation column that is sufficiently large, the pressure drop within the column can be kept small.

The invention can be partly or entirely embodied or supported by one or more suitable software programs, which can be stored on or otherwise provided by any kind of data carrier, and which might be executed in or by any suitable data processing unit. Software programs or routines are preferably applied for controlling sample loading and sample injection.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Fig. 1A: shows a set-up according to a first embodiment of the invention, with the injection valve being set to its first position;
- Fig. 1B: shows the set-up of Fig. 1A, with the injection valve being set to its second position;
- Fig. 2A: shows a 2-position/10-port injection valve in its first position;
- Fig. 2B: shows the 2-position/10-port injection valve in its second position;
- Fig. 3: depicts a modified set-up according to the first embodiment;
- Fig. 4: shows a set-up according to a second embodiment of the invention;
- Fig. 5: shows a set-up according to a third embodiment of the invention.

### DETAILED DESCRIPTION OF EMBODIMENTS OF THE INVENTION

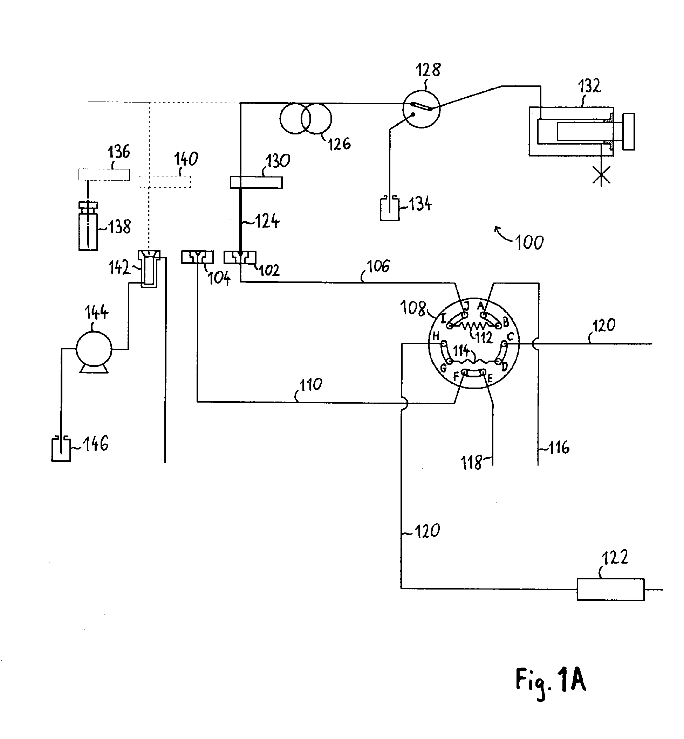

Fig. 1A shows a first embodiment of a system for separating different components of a given sample. The system comprises an autosampling unit 100 that is adapted to provide the sample to a first needle port 102 or to a second needle port 104. The first needle port 102 is part of a first loading flow path 106 that connects the first needle port 102 with a valve port of a 2-position/10-port injection valve 108. Similarly, the second needle port 104 is part of a second loading flow path 110 that is connected with another valve port of the injection valve 108.

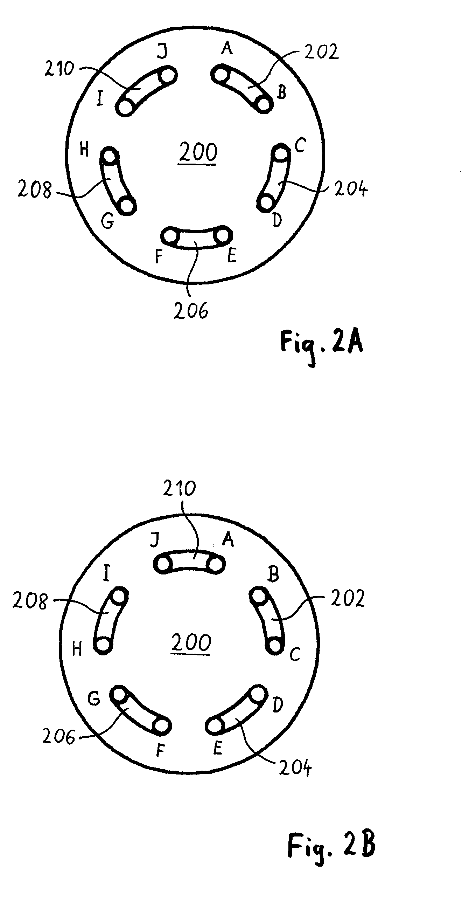

In Fig. 2A and 2B, a 2-position/10-port injection valve 200 is shown in more detail. The injection valve 200 includes a disk shaped rotor with five circumferential switching channels 202, 204, 206, 208, 210 on its front face. The rotor can pivot on a pivot axis between a plurality of rotor positions, with the rotor positions being spaced 36° apart. The rotor face extends perpendicular to the valve's axis of rotation, which lies face wise adjacent to the face of a stator. The stator comprises ten stator ports A to J, which lie on a port circle and extend axially to a rear face. The switching channels 202 to 210 each span an arc circle of 36° and provide an uninterrupted flow path between adjacent peripheral stator ports.

In Fig. 2A, a first position of the valve's rotor is depicted. In this position, the switching channel 202 communicates flow between the valve ports A and B, the switching channel 204 connects the valve ports C and D, etc. The switching channel 210 connects the valve ports I and J.

In Fig. 2B, the injection valve 200 is shown after the valve's rotor has been pivoted by 36° in the clockwise direction. In this second position of the 2-position/10-port injection valve 200, the stator ports B and C are connected by the switching channel 202, the ports D and E are connected by the switching channel 204, etc. The ports J and A are connected by the switching channel 210.

The injection valve 108 shown in Fig. 1A is of the type depicted in Fig. 2A and Fig. 2B. An external first sample loop 112 comprising a well-defined volume is connected between the valve ports B and I of the injection valve 108. The valve assembly further comprises an external second sample loop 114 connected between the valve ports D and G. In case the injection valve 108 is set to its first position as shown in Fig. 1A, the first loading flow path 106 is connected with one end of the first sample loop 112, and the other end of the first sample loop 112 is connected with a first waste outlet 116. The second loading flow path 110 is directly connected with a second waste outlet 118, and the second sample loop 114 is part of the flow path 120 for sample separation. The sample contained within the second sample loop 114 is transferred at high pressure to a separation column 122. For example, a pump adapted for generating a pressure of 100 to 400 bar might be connected to the stator port C. The various components (solutes) in the sample migrate through the separation column 122 at different rates due to the solute's affinity to the column packaging material. Because of the different rates of movement of the solutes, the sample components gradually separate as they move through the separation column 122. After exiting the separation column 122, the sample components might e.g. be carried to a detector and a succeeding fraction collector.

The autosampling unit 100 is adapted for loading well-defined sample volumes into the first sample loop 112, or into the second sample loop 114. Generally, two different loop filling modes are available: complete loop filling and partial loop filling. Complete loop filling is usually applied in analytical work, because it allows accomplishing superior precision. For complete loop filling, the sample loop has to be overfilled, e.g. by a factor between 3 and 7. It might be advantageous to apply partial loop filling instead of complete loop filling. In partial loop filling, the loop is filled only up to e.g. 50 % of its volume.

The autosampling unit 100 comprises a needle 124 that is connected, via a buffer loop 126, to a 3-way solenoid valve 128. The needle 124 is attached to a mount 130 that might e.g. be coupled with an x-theta-z robotic device. By means of the x-theta-z robotic device, the needle 124 may be moved to any desired position.

First, the 3-way solenoid valve 128 is switched such that it connects a metering device 132 with a bottle 134 that is filled with flush solvent. The metering device 132 is adapted for metering a well-defined amount of liquid. It includes a piston, its seal, housing and an associated piston actuator mechanism. When moving back the piston of the metering device 132, a vacuum is created, and the flush solvent is attracted to follow the piston movement. Now, the tubing and a portion of the metering device 132 is filled with flush solvent. In the meantime, the needle 124 might be moved to the first needle port 102, which makes a tight seal to the needle tip and connects the needle 124 with the first loading flow path 106. After a sufficient amount of solvent has been aspirated, the 3-way solenoid valve 128 is switched back to connect the metering device 132 with the buffer loop 126, the needle 124, the first loading flow path 106 and the first sample loop 112. The piston of the metering device 132 moves forward until its home position is reached. Hence, the buffer loop 126, the needle 124, the first loading flow path 106 and the first sample loop 112 are flushed with flush solvent.

Now, the system is ready to aspirate sample from a sample vessel. The autosampling unit 100 might as well comprise one or more well plates, whereby the respective wells might contain a variety of different samples. The needle's mount is moved to the position 136, and the needle 124 dives into the selected sample vessel 138. The required amount of sample is aspirated by moving back the piston of the metering device 132.

If low carry over is required, the needle 124 will be moved to a flush port 142 next. The needle's mount is moved to the position 140, and before the needle 124 reaches the flush port 142, the flush pump 144 (e.g. a peristaltic pump) is activated. Fresh solvent is pumped from the bottle 146 to the flush port 142. After the needle 124 has been cleaned outside, it is moved to the first needle port 102. Then, the piston of the metering device 132 moves forward until it reaches its home position. The first sample loop 112 is entirely filled with pure sample, with excess sample being discharged via the first waste outlet 116.

After sample has been loaded into the first sample loop 112, the rotor of the injection valve 108 is pivoted by 36°, in order to switch the injection valve 108 from its first position to its second position.

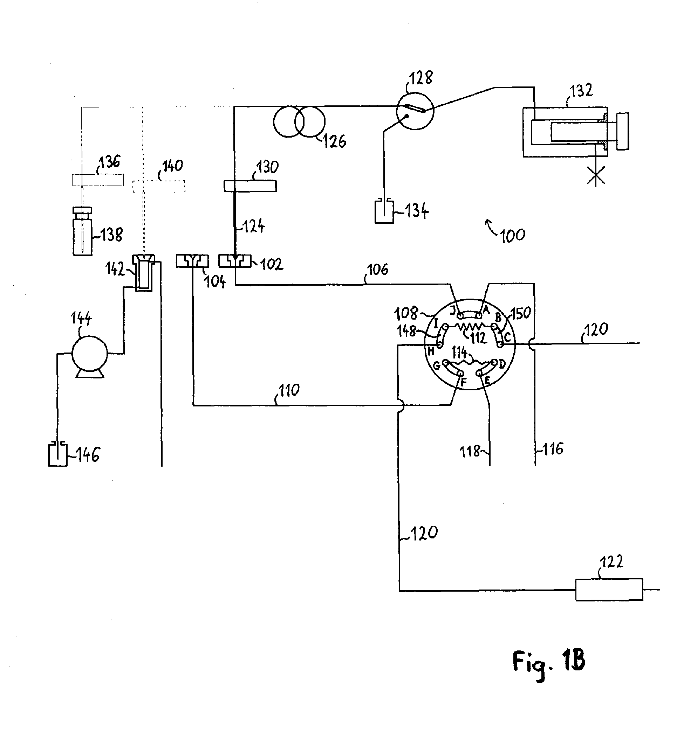

In Fig. 1 B, the system of Fig. 1A is shown once more, whereby the injection valve 108 has been set to its second position. Identical features are referred to with the same reference signs as used in Fig. 1A. In the injection valve's second position, the first sample loop 112 is connected, via the switching channels 148 and 150, with the flow path 120 for sample separation. Accordingly, the sample contained in the first sample loop 112 is injected into the high pressure stream and flushed onto the separation column 122. There, the various compounds of the sample that has been contained in the first sample loop 112 are separated. In the injection valve's second position, the second sample loop 114 is connected with the second loading flow path 110, and with the second waste outlet 118. Via the second needle port 104, sample can be loaded into the second sample loop 114. The first loading flow path 106 is directly connected with the first waste outlet 116.

The tasks of loading sample into one of the sample loops and injecting sample of the other sample loop into the flow path 120 for sample separation can be performed concurrently. Hence, the embodiment of Fig. 1 allows increasing the system's throughput.

The first sample loop 112 and the second sample loop 114 might e.g. be of equal volume. Alternatively, the first sample loop 112 might e.g. be implemented as an analytical scale sample loop, while the second sample loop 114 might e.g. be implemented as a preparative scale sample loop. In this case, the first loading flow path 102 might comprise capillaries having a rather small inner diameter. Thus, the sample dispersion can be kept small. In contrast, the second loading flow path 110 might be adapted for loading large sample volumes into the second sample loop 114. Accordingly, a tubing with a large inner diameter might be employed.

For performing analytical work, a rather small sample volume (in the range of 1 µl to 100 µl) is slowly transported to a separation column. In analytical work, flow rates of about 100 µl/min to 2 ml/min are employed. In order to accomplish accurate results, the sample dispersion has to be kept small. For this reason, the analytical scale flow paths are realized using capillaries with a rather small inner diameter.

In contrast, for preparative work, sample volumes in the order of 100 µl to 5 ml are required. Otherwise, the size of the fractions obtained at the exit of the preparative scale separation column would become too small. For preparative work, flow rates of up to 100 ml/min can be employed. For this reason, the inner diameter of the tubing must not be too small.

In analytical work, the most precise results can be obtained by using separation columns of relatively small size. In preparative work, it is favorable to use separation columns that are not too small, because otherwise, there will be a significant pressure drop across the separation column. Instead of employing an all-purpose separation column 122 as shown in Fig. 1A and 1 B, one might provide two separation columns, with one separation column being adapted for analytical scale separation, and with the other separation column being adapted for preparative work.

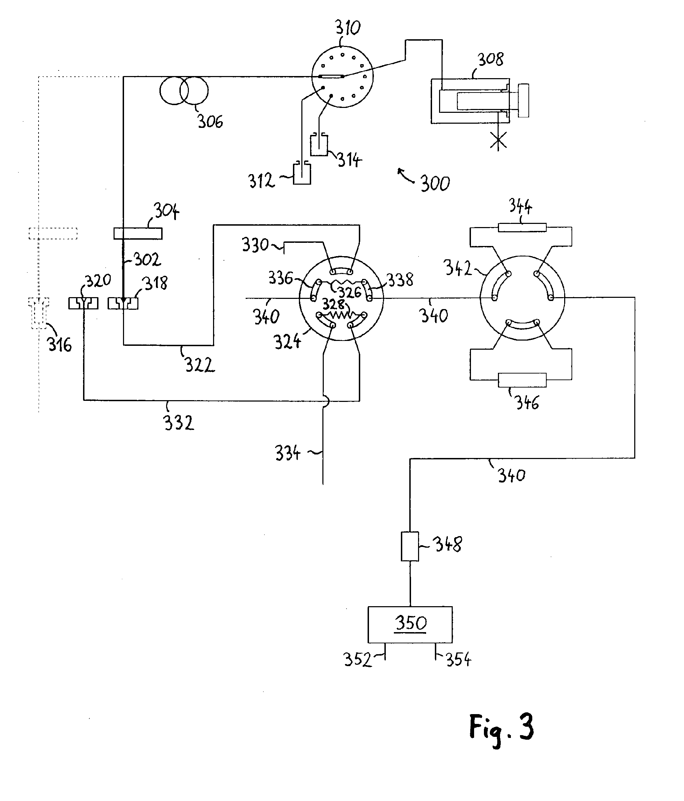

In Fig. 3, a modified set-up is shown. In contrast to the embodiment shown in Fig. 1A and Fig. 1 B, the set-up of Fig. 3 comprises both an analytical scale separation column and a preparative scale separation column. The system comprises an autosampling unit 300 with a needle 302, a mount 304, a buffer loop 306 and a metering device 308. The 3-way solenoid valve 128 shown in Fig. 1A and 1 B has been replaced by a solvent selection valve 310. In Fig. 3, the solvent selection valve 310 is implemented as a 12-position/13-port valve. The solvent selection valve 310 allows connecting the metering device 308 either with the needle 302, or with a bottle 312 filled with a first solvent, or with a bottle 314 filled with a second solvent. Hence, various different solvents can be drawn in by the metering device 308.

The needle 302 can be moved to one or more sample vessels (not shown in Fig. 3) in order to aspirate sample. The needle 302 can be moved to a flush-port 316. There, the needle 302 can be cleaned before the needle 302 is moved to one of the needle ports 318, 320.

The system of Fig. 3 comprises two separate loading flow paths. The first needle port 318 is connected, via the first loading flow path 322, with a 2-position/10-port injection valve 324. Furthermore, a first sample loop 326 and a second sample loop 328 are connected with the injection valve 324. If the injection valve 324 is set to its first position (not shown in Fig. 3), the first loading flow path 322 will be connected with the first sample loop 326 and with a first waste outlet 330. If the injection valve 324 is set to its second position, as shown in Fig. 3, the second loading flow path 332 will be connected with the second sample loop 328, and with a second waste outlet 334. Therefore, a sample volume injected into the second needle port 320 can be loaded into the second sample loop 328.

In case the injection valve 324 is set to its second position, the first sample loop 326 is connected, via the channels 336, 338, with a flow path 340 for sample separation. The flow path 340 for sample separation connects the injection valve 324 with a column selection valve 342. In Fig. 3, the column selection valve 342 has been implemented as a 2-position/6-port valve. The column selection valve 342 allows selecting a separation column to be inserted into the flow path 340 for sample separation. For example, if the column selection valve 342 is set to its first position, as shown in Fig. 3, an analytical scale separation column 344 will be connected with the flow path 340 for sample separation, and an analytical scale sample volume contained in the first sample loop 326 can be flushed onto the analytical scale separation column 344. If the column selection valve 342 is set to its second position, a preparative scale separation column 346 will be inserted into the flow path 340 for sample separation.

The output of the selected separation column might e.g. be connected with a diode array detector 348, and/or with a fraction collector 350. At the fraction collector's output, various fractions 352 of the sample as well as waste 354 may be obtained.

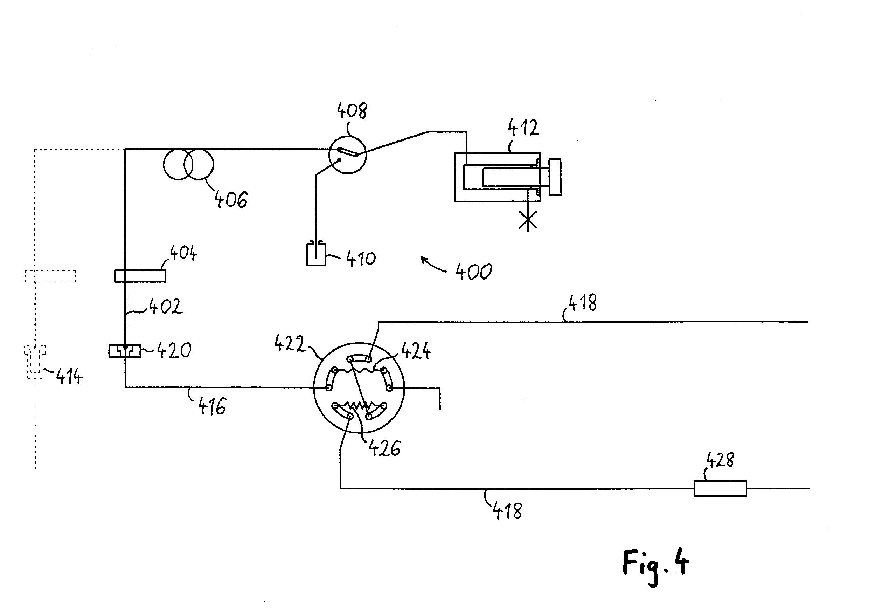

In Fig. 4, another embodiment of the present invention is shown. The set-up comprises an autosampling unit 400 with a needle 402, a mount 404, a buffer loop 406, a 3-way solenoid valve 408, a bottle 410 with flush solvent, a metering device 412, and a flush port 414. In the embodiment of Fig. 4, one loading flow path 416 and one flow path 418 for sample separation are connected with a 2-position/10-port injection valve 422. In Fig. 4, the injection valve 422 is shown in its first position. The first sample loop 424 is coupled, via the loading flow path 416, with a needle port 420, and the second sample loop 426 is connected with the flow path 418 for sample separation. The content of the second sample loop 426 is flushed onto a separation column 428. If the selection valve 422 is switched to its second position, the second sample loop 426 will be connected with the loading flow path 416. The first sample loop 424 will be coupled with the flow path 418 for sample separation, and the content of the first sample loop 424 will be flushed onto the separation column 428.

The separation column 428 might e.g. be implemented as an all-purpose separation column that can be used both for analytical work and for preparative work. Alternatively, the flow path 418 for sample separation might comprise a column selection valve like the one shown in Fig. 3, with the column selection valve being adapted for inserting either an analytical scale separation column or a preparative scale separation column into the flow path for sample separation.

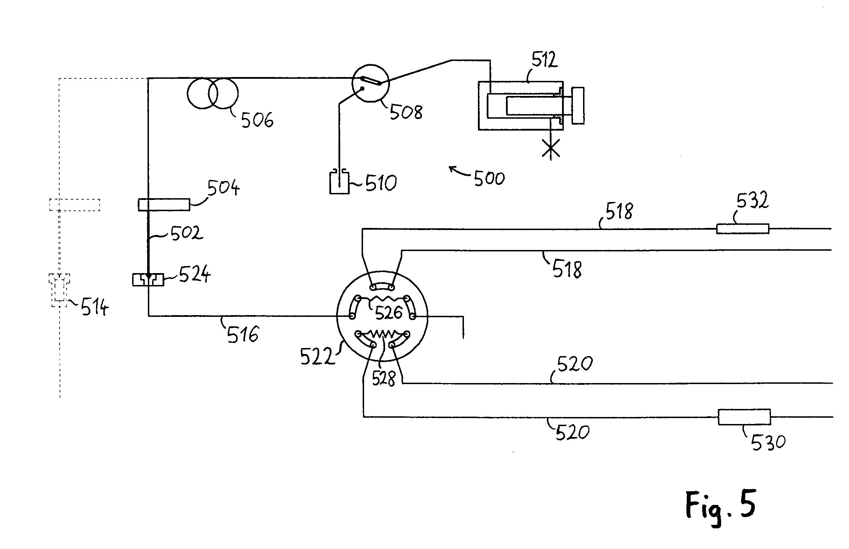

In Fig. 5, yet another embodiment of the present invention is shown. Again, the set-up comprises an autosampling unit 500 with a needle 502, a mount 504, a buffer loop 506, a 3-way solenoid valve 508, a bottle 510 with flush solvent, a metering device 512, and a flush port 514.

The set-up depicted in Fig. 5 comprises one common loading flow path 516 and two separate flow paths for sample separation 518, 520. If the injection valve 522 is set to its first position (which is shown in Fig. 5), sample can be loaded, via the needle port 524 and the loading flow path 516, into a first sample loop 526. If the injection valve 522 is switched to its second position (not shown in Fig. 5), sample can be loaded, via the loading flow path 516, into a second sample loop 528.

The first sample loop 526 might e.g. be implemented as an analytical scale sample loop of small volume, while the second sample loop 528 might e.g. be adapted for storing large sample volumes required for preparative work. In the injection valve's first position, which is shown in Fig. 5, the second sample loop 528 is connected with the second flow path 520 for sample separation. The second flow path 520 for sample separation might comprise a preparative scale separation column 530. The preparative scale sample volume contained in the second sample loop 528 is transferred onto said separation column 530. At the output of the preparative scale separation column 530, various different fractions of sample may be collected.

In order to perform an analytical scale separation, the injection valve 522 might be set to its second position (not shown in Fig. 5). As a consequence, the first sample loop 526 is coupled with the first flow path 518 for sample separation, which might comprise an analytical scale separation column 532. The small sample volume contained in the first sample loop 526 is flushed onto the analytical scale separation column 532. Preferably, a small flow rate is applied. As a consequence, the different components of the sample can be analyzed with high accuracy.

## Claims

1. An injection valve assembly for use in a system for separating compounds in a given sample, said injection valve assembly comprising
a multi-route injection valve (108),
a first (112) and a second (114) sample loop, each being connected between different valve ports of the multi-route injection valve (108),
wherein the multi-route injection valve (108) is operable to couple separately each of the first sample loop (112) and the second sample loop (114) with at least one loading flow path (106, 110),
and wherein the multi-route injection valve (108) is operable to couple separately each of the first sample loop (112) and the second sample loop (114) with at least one flow path (120) for sample separation.

2. The injection valve assembly of claim 1,
wherein the multi-route injection valve is adapted for being set to two alternative positions,
whereby, in the first position of the injection valve (108), the first sample loop (112) is coupled with one of the loading flow paths (106, 110), while the second sample loop (114) is coupled with one of the flow paths (120) for sample separation,
and whereby, in the second position of the injection valve, the first sample loop (112) is coupled with one of the flow paths (120) for sample separation, while the second sample loop (114) is coupled with one of the loading flow paths (106, 110).

3. The injection valve assembly of claim 1 or any one of the above claims, whereby, in a first position of the injection valve, the first sample loop (112, 326) is coupled with a first loading flow path (106, 322), while the second sample loop (114, 328) is coupled with a flow path (120, 340) for sample separation,
and whereby, in a second position of the injection valve, the first sample loop (112, 326) is coupled with said flow path (120, 340) for sample separation, while the second sample loop (114, 328) is coupled with a second loading flow path (110, 332).

4. The injection valve assembly of claim 1 or any one of the above claims,
whereby, in a first position of the injection valve, the first sample loop (424) is coupled with a loading flow path (416), while the second sample loop (426) is coupled with a flow path (418) for sample separation,
and whereby, in a second position of the injection valve, the first sample loop (424) is coupled with said flow path (418) for sample separation, while the second sample loop (426) is coupled with said loading flow path (416).

5. The injection valve assembly of claim 4, wherein said flow path for sample separation comprises an all-purpose separation column.

6. The injection valve assembly of claim 1 or any one of the above claims,
whereby, in a first position of the injection valve, the first sample loop (526) is coupled with a loading flow path (516), while the second sample loop (528) is coupled with a second flow path (520) for sample separation,
and whereby, in a second position of the injection valve, the first sample loop (526) is coupled with a first flow path (518) for sample separation, while the second sample loop (528) is coupled with said loading flow path (516).

7. The injection valve assembly of claim 6, wherein the first flow path for sample separation comprises an analytical scale separation column, and
wherein the second flow path for sample separation comprises a preparative scale separation column.

8. The injection valve assembly of claim 1 or any one of the above claims, further comprising at least one of the following features:
the first sample loop is a sample loop for analytical scale sample volumes, and the second sample loop is a sample loop for preparative scale sample volumes;
the first sample loop and the second sample loop substantially comprise the same volumes;
at least one of the loading flow paths comprises an unidirectional restriction valve;
the injection valve is implemented as a rotatable valve comprising a stator element with a multitude of peripheral ports and a rotor element with switching channels that may communicate flow between adjacent peripheral ports of the stator element;
the injection valve is implemented as a two-position multiport valve, preferably as a 2-position multiport valve comprising a multitude of peripheral ports, further preferably as a 2- position/10-port valve.

9. A system for separating compounds in a given sample, the system comprising
a multi-route injection valve (108),
a first (112) and a second (114) sample loop being connected between respective valve ports of the multi-route injection valve (108),
one or more loading flow paths (106, 110), with the multi-route injection valve (108) being operable to couple the first sample loop (112) and the second sample loop (114) separately with at least one of the loading flow paths (106, 110),
one or more flow paths (120) for sample separation, with the multi-route injection valve (108) being operable to couple the first sample loop (112) and the second sample loop (114) separately with one of the flow paths (120) for sample separation.

10. The system of claim 9, comprising a loading flow path, with the injection valve being operable to couple either the first sample loop or the second sample loop with said loading flow path.

11. The system of claim 9, comprising a first and a second loading flow path, with the injection valve being operable to couple either the first sample loop with said first loading flow path, or the second sample loop with said second loading flow path.

12. The system of claim 9 or any one of the above claims, wherein at least one of the loading flow paths comprises an unidirectional restriction valve.

13. The system of claim 9 or any one of the above claims, comprising a flow path for sample separation, with the injection valve being operable to couple either the first or the second sample loop with said flow path for sample separation.

14. The system of claim 13, wherein said flow path for sample separation comprises an all-purpose separation column.

15. The system of claim 9, comprising a first and a second flow path for sample separation, with the injection valve being operable to couple either the first sample loop with said first flow path for sample separation or the second sample loop with said second flow path for sample separation.

16. The system of claim 15, wherein the first flow path for sample separation comprises an analytical scale separation column, and wherein the second flow path for sample separation comprises a preparative scale separation column.

17. The system of claim 9 or any one of the above claims, further comprising at least one of the following features:
the first sample loop is a sample loop for analytical scale sample volumes, and the second sample loop is a sample loop for preparative scale sample volumes;
the first sample loop and the second sample loop substantially comprise the same volumes;
at least one of the loading flow paths comprises a sample port, preferably a needle port, for loading sample into at least one of the first and the second sample loop;
the sample is drawn into a buffer loop before being loaded, via one of said sample ports, into either the first sample loop or the second sample loop;
at least one of pressure loading and suction loading is applied for loading well-defined sample volumes into at least one of the first and the second sample loop, preferably by means of a dispensing device, in particular by means of a syringe or a gear pump.

18. A liquid chromatography system comprising any one of the features of the above claims.

19. A method for separating compounds in a given sample, the method comprising the steps of:
loading a first sample volume into a first sample loop (112), and injecting a sample contained in a second sample loop (114) into a flow path (120) for sample separation,
switching a multi-route injection valve (108),
injecting the sample of the first sample loop (112) into a flow path (120) for sample separation.

20. The method of claim 19, wherein the multi-route injection valve is switched from a first position to a second position,
whereby, in the first position of the injection valve, the first sample loop (112, 326) is coupled with a first loading flow path (106, 322), while the second sample loop (114, 328) is coupled with a flow path (120, 340) for sample separation,
and whereby, in the second position of the injection valve, the first sample loop (112, 326) is coupled with said flow path (120, 340) for sample separation, while the second sample loop (114, 328) is coupled with a second loading flow path (110, 332).

21. The method of claim 19, wherein the multi-route injection valve is switched from a first position to a second position,
whereby, in the first position of the injection valve, the first sample loop (424) is coupled with a loading flow path (416), while the second sample loop (426) is coupled with a flow path (418) for sample separation,
and whereby, in the second position of the injection valve, the first sample loop (424) is coupled with said flow path (418) for sample separation, while the second sample loop (426) is coupled with said loading flow path (416).

22. The method of claim 19, wherein the multi-route injection valve is switched from a first position to a second position,
whereby, in the first position of the injection valve, the first sample loop (526) is coupled with a loading flow path (516), while the second sample loop (528) is coupled with a second flow path (520) for sample separation,
and whereby, in the second position of the injection valve, the first sample loop (526) is coupled with a first flow path (518) for sample separation, while the second sample loop (528) is coupled with said loading flow path (516).

23. The method of claim 19 or any one of the above claims, further comprising one of the following features:
the sample contained in the second sample loop is flushed onto a preparative scale separation column, and the sample contained in the first sample loop is flushed onto an analytical scale separation column,
either the sample contained in the second sample loop or the sample contained in the first sample loop is flushed onto an all-purpose separation column.

24. The method of claim 19 or any one of the above claims, wherein a second sample volume is loaded into the second sample loop while injecting the sample of the first sample loop into a flow path for sample separation.

25. A software program or product, preferably stored on a data carrier, for controlling the execution of the method of any of claims 19 to 24 when run on a data processing system such as a computer.
